# EUROPEAN PATENT APPLICATION

(11) **EP 2 595 072 A1**
(43) Date of publication of application: **22.05.2013**
(21) Application number: 12192684.4
(22) Date of filing: 14.11.2012
(51) Int. Cl.: G06F 17/30

(54) **System and method implementing a text analysis repository**

(30) Priority: 15.11.2011 US 201113297135
(71) Applicant: Business Objects Software Limited, Dublin 1 (IE)
(72) Inventor: Bornhoevd, Christof, 69190 Walldorf (DE); Holmberg, Greg, 69190 Walldorf (DE); Kubis, Robert, 69190 Walldorf (DE)
(74) Representative: Cole, Douglas Lloyd

(57) **Abstract**

One embodiment includes a computer implemented method of storing information. The method includes implementing, by a document repository server computer, a schema-flexible database. The method further includes receiving, by the document repository server computer, processed text information from a text analysis computer, wherein a semantic type is assigned to the processed text information. The method further includes storing, by the document repository server computer, the processed text information in the schema-flexible database. The method further includes outputting, by the document repository server computer to an analysis computer, data selected from the processed text information stored in the schema-flexible database in response to a query received from the analysis computer.

## Description

### BACKGROUND

The present invention relates to data storage, and in particular, to data storage for text analysis applications.

Unless otherwise indicated herein, the approaches described in this section are not prior art to the claims in this application and are not admitted to be prior art by inclusion in this section.

Modem business applications do not only operate on internal well-structured data, but increasingly need to also incorporate external, typically less well-structured data from various sources. Traditional data warehousing or data mining approaches require resource intensive structuring, modeling and integration of the data before it can actually be uploaded into a consolidated data store for consumption. These upfront pre-processing and modeling steps make the consideration of data that is less well structured in many cases prohibitively expensive. As a result, only a fraction of the available business-relevant data is actually leveraged for business intelligence and decision support.

### SUMMARY

Embodiments of the present invention improve data storage for text analysis applications. SAP, through the acquisition of Business Objects, owns text analytics tools to analyze and mine text documents. These tools provide a platform to lower the cost for leveraging weakly structured data, such as text in business applications. Further detailed below is a scalable repository or persistent store for the output of these text analysis tools (e.g., document properties, extracted entities, part-of-speech tagging, as well as summarization and categorization information) that supports the analysis of these data objects on document and document collection levels, and that provides the capabilities to combine them with data from other structured or weakly structured data sources.

In one embodiment the present invention includes a computer implemented method of storing information. The method includes implementing, by a document repository server computer, a schema-flexible database. The method further includes receiving, by the document repository server computer, processed text information from a text analysis computer, wherein a semantic type is assigned to the processed text information. The method further includes storing, by the document repository server computer, the processed text information in the schema-flexible database. The method further includes outputting, by the document repository server computer to an analysis computer, data selected from the processed text information stored in the schema-flexible database in response to a query received from the analysis computer.

A system may implement the above method, using a text analysis computer to generate the processed text information and a document repository server computer to perform the other functions. A computer readable medium may store a computer program for controlling a document repository server computer to implement the above method.

The processed text information may include interrelated entities. The interrelated entities may be other than key-value pairs. An entity may include attributes and associations. The processed text information may differ from document-oriented data. The schema-flexible database may differ from a document-oriented database. The schema-flexible database may differ from a graph-oriented database. The semantic type may include an item class, and attribute type, and a relationship type.

An embodiment may have one or more of the following features. First, it provides support for custom linguistic processing code. Second, it allows for scalability and performance improvement. Third, it provides integration with structured data (databases), content management systems, and full-text search.

The following detailed description and accompanying drawings provide a better understanding of the nature and advantages of the present invention.

### BRIEF DESCRIPTION OF THE DRAWINGS

FIG. 1 is a block diagram of a system including a document collection repository according to an embodiment.

FIG. 2 is a flowchart of a method of operation of a document collection repository (e.g., the document repository 106 of FIG. 1).

FIG. 3 is a block diagram showing a high-level view of the AIS system architecture (e.g., that implements the document repository 106 of FIG. 1).

FIG. 4 is a class diagram, conforming to unified modeling language (UML) format, showing the key concepts of the AIS data representation model.

FIG. 5 is a diagram that shows the Info Item types (Terms) that the system uses to represent "regular" entities.

FIG. 6 is a diagram that shows the Entity types.

FIG. 7 is a diagram that shows the SubEntity types.

FIG. 8 is a diagram that shows a data model for phrases.

FIG. 9 is a block diagram showing further details of the text analysis cluster 104 (cf. FIG. 1).

FIG. 10 is a block diagram of an example computer system and network for implementing embodiments of the present invention.

### DETAILED DESCRIPTION

Described herein are techniques for storing information for text analysis and for combining this information with information or data from other data sources. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

In this document, various methods, processes and procedures are detailed. Although particular steps may be described in a certain order, such order is mainly for convenience and clarity. A particular step may be repeated more than once, may occur before or after other steps (even if those steps are otherwise described in another order), and may occur in parallel with other steps. A second step is required to follow a first step only when the first step must be completed before the second step is begun. Such a situation will be specifically pointed out when not clear from the context.

In this document, the terms "and", "or" and "and/or" are used. Such terms are to be read as having the same meaning; that is, inclusively. For example, "A and B" may mean at least the following: "both A and B", "only A", "only B", "at least both A and B". As another example, "A or B" may mean at least the following: "only A", "only B", "both A and B", "at least both A and B". When an exclusive-or is intended, such will be specifically noted (e.g., "either A or B", "at most one of A and B").

In this document, the term "server" is used. In general, a server is a hardware device, and the descriptor "hardware" may be omitted in the discussion of a hardware server. A server may implement or execute a computer program that controls the functionality of the server. Such a computer program may also be referred to functionally as a server, or be described as implementing a server function; however, it is to be understood that the computer program implementing server functionality or controlling the hardware server is more precisely referred to as a "software server", a "server component", or a "server computer program".

In this document, the term "database" is used. In general, a database is a data structure to organize, store, and retrieve large amounts of data easily. A database may also be referred to as a data store. The term database is generally used to refer to a relational database, in which data is stored in the form of tables and the relationship among the data is also stored in the form of tables. A database management system (DBMS) generally refers to a hardware computer system (e.g., persistent memory such as a disk drive, volatile memory such as random access memory, a processor, etc.) that implements a database.

In this document, the term "schema" is used. In general, a schema is a structure of a database system described in a formal language supported by the DBMS and refers to the organization of data to create a blueprint of how a database will be constructed (divided into database tables). In a relational database, the schema defines the tables, fields, relationships, views, indexes, packages, procedures, functions, queues, triggers, types, sequences, materialized views, synonyms, database links, directories, Java code, extensible markup language (XML) schemas, and other elements. In most databases, the schema is defined beforehand and thus they are more properly referred to as having a "static" schema or a "non-flexible" schema; however since this is the general case, the qualifiers "static" and "non-flexible" are often omitted.

In this document, the term "schema-flexible" is used. Schema-flexible data refer to data that do not have a common or static schema. A schema-flexible database refers to a database that does not require a schema to have been defined in order to store a data record. In general, a schema-flexible database is not a relational database, and may also be referred to as being "NoSQL" or "NoRel". Schema-flexible data stores include a name-value store (also referred to as a key-value store), a graph-oriented database, and a document-oriented database.

A name-value store (or key-value store) may generally be referred to as an attribute-value store. An attribute-value store is a collection of attribute-value pairs (e.g., key-value pairs). Each key-value pair is a tuple in the form <attribute name, value>. A data model that corresponds to an attribute value store may be more generally referred to as an entity-attribute-value (EAV) model, an object-attribute-value model, or an open schema.

A graph-oriented database (also referred to as a graph database) uses graph structures with nodes, edges, and properties to represent and store information. Nodes represent entities such as people, businesses, accounts, or any other item you might want to keep track of. Properties are pertinent information that relate to nodes. Edges are the lines that connect nodes to nodes or nodes to properties and they represent the relationship between the two. Most of the important information is really stored in the edges. Meaningful patterns emerge when one examines the connections and interconnections of nodes, properties, and edges. Examples of a graph-oriented database include AllegroGraph™, Bigdata™, Cytoscape™, DEX™, Filament™, Graphd™, HyperGraphDB™, InfiniteGraph™, InfoGrid™, Neo4j™, OrientDB™, sones GraphDB™, and VertexDB™.

A document-oriented database stores documents. For example consider the following two documents:
FirstName="Jonathan", Address="5 Oak St.", Hobby="sailing"
FirstName="Bob", Address="15 Wanamassa Point Road", Spouse="Sally"

Notice that both documents have some similar information and some different -- but unlike a relational database where each record would have the same set of fields and unused fields might be kept empty, there are no empty "fields" in either document (record) in this case. This system allows information to be added any time without using storage space for "empty fields" as in relational databases. Examples of a document-oriented database include Lotus Notes™, askSam™, Apstrata™, Datawasp™, SimpleDB™, CRX™, MUMPS Database™, UniVerse™, UniData™, Apache Jackrabbit™, Apache CouchDB™, FleetDB™, MongoDB™, VMWare GemFire Enterprise™, OrientDB™, RavenDB™, Redis™, Riak™, StrokeDB™, Terrastore™, ThruDB™, Persevere™, and DBSlayer™.

As discussed in more detail below, an embodiment implements a schema-flexible database that is neither graph-oriented nor document-oriented. Further, in contrast with key-value stores that store data in the form of simple key-value pairs, an embodiment stores data in the form of interrelated entities.

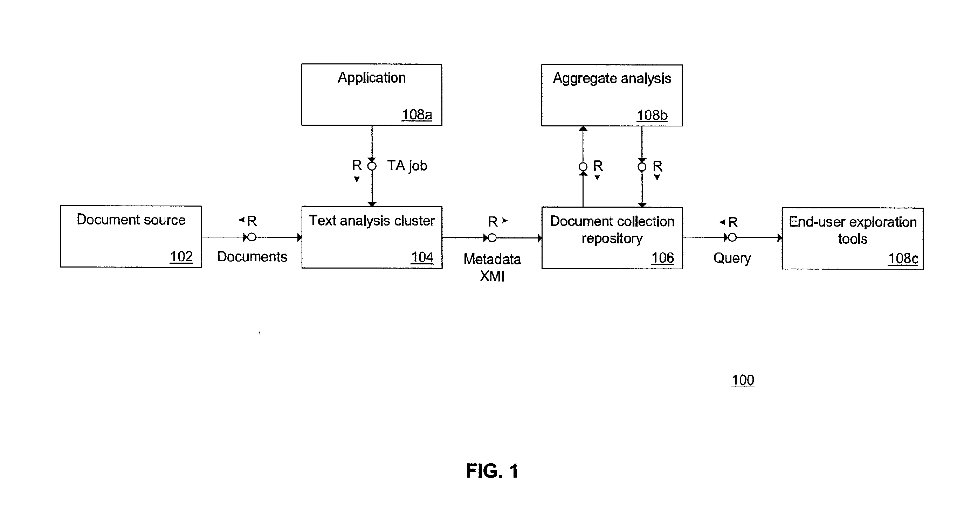

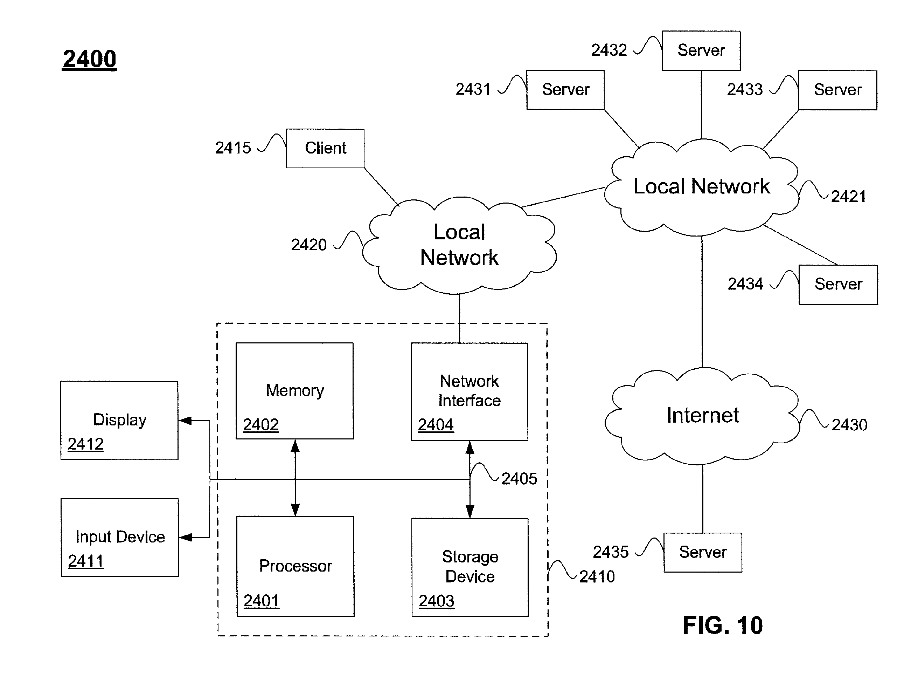

FIG. 1 is a block diagram of a system 100 including a document collection repository according to an embodiment. The document collection repository may also be referred to as the "document repository" or the "repository". The system 100 includes a document source computer 102, a text analysis cluster of multiple computers 104, a document collection repository server computer 106, and client computers 108a, 108b and 108c. (For brevity, the description may omit the descriptor "computer" or "server" for various components; e.g., a "document collection repository server computer" may be referred to as a "document collection repository" or simply "database".) These components 102, 104, 106 and 108a-c are connected via one or more computer networks, e.g. a local area network, a wide area network or the internet. Specific hardware details of the computers that make up the system 100 are provided in FIG. 10.

The document source 102 stores documents. The document source 102 may include one or more computers. The document source 102 may be a server, e.g. a web server, an email server, a file server, etc. The documents may be text documents in various formats, e.g. portable document format (PDF) documents, hypertext markup language (HTML) documents, word processing documents, etc. The document source 102 may store the documents in a file system, a database, or according to other storage protocols.

The text analysis system 104 accesses the documents stored by the document source 102, performs text analysis on the documents, and outputs processed text information to the document repository 106. The processed text information may be in the form of extensible markup language (XML) metadata interchange (XMI) metadata. The client 108a, also referred to as the application client 108a, provides a user interface to business functions, which in turn may make requests to the text analysis system 104 in order to implement that business function. For example, a user uses the application client 108a to discover coworkers related to a given customer, which the application implements by making a request to the text analysis system 101 to analyze that user's email contained in an email server, and using a particular analysis configuration designed to extract related people and companies. The text analysis system 104 may be one or more computers. The operation of the text analysis system 104 is described in more detail in subsequent sections. In addition, further details of the text analysis cluster 104 are provided in the related U.S. Application No. _ for "System and Method Implementing a Text Analysis Service", attorney docket number 000005-018700US, filed on the same date as the present application.

The document collection repository 106 receives the processed text information from the text analysis cluster 104, stores the processed text information, and interfaces with the clients 108b and 108c. The processed text information may be stored in one or more collections, as designated by the application. The client 108b, also referred to as the aggregate analysis client 108b, interfaces with the document repository 106 to perform collection-level analysis. This analysis may involve queries over an entire collection and may result in insertions of connections between documents and aggregate metrics about the collection. The client 108c, also referred to as the exploration tools client 108c, interfaces with the document repository 106 to process query requests from one or more users. These queries may be for the results of the collection-level analysis, for the results of graph traversal (the connections between documents), etc. The operation of the document repository 106 is described in more detail in subsequent sections.

Note that it is not required for the document repository 106 to store all the documents processed by the text analysis cluster 104. The document repository 106 may store all of, or a portion of, the extracted entities, sentiments, facts, etc.

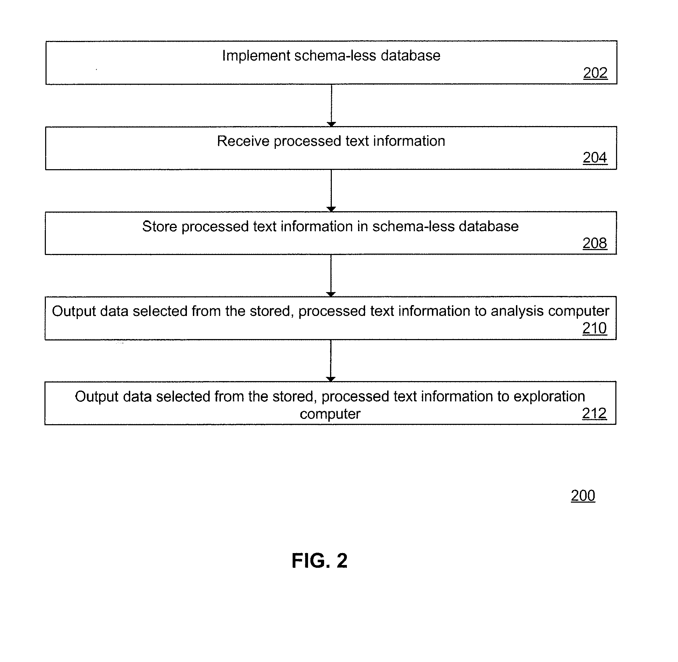

FIG. 2 is a flowchart of a method 200 of operation of a document repository (e.g., the document repository 106 of FIG. 1). The steps 202-212 are described below as an overview, with the details provided in subsequent sections.

At 202, the document repository implements a schema-flexible database. A schema-flexible database may be generally contrasted with a relational database. In addition, the schema-flexible database implemented by the document repository does not store data in the form of simple key-value pairs, instead it stores data in the form of interrelated entities. Entities can have a semantic type from a taxonomy, and entities of the same type can have different attribute sets; both of these features are not present in graph-oriented databases that model data as nodes connected through edges.

More details of a comparison between the schema-flexible database of the document repository and graph databases follow. Graph-based data models are more general and allow arbitrary associations. A general graph-based data model is the Resource Description Framework (RDF) to represent statements about entities. Statements are stored as subject-predicate-object triples; all triples form a labeled graph representing a network of values (the labels). They therefore do not offer an inherent means to represent an entity as a unit. Object representation can only be realized on top based on a defined interpretation of particular graph labels. Consequently, when stored in RDF, entities are decomposed into statements. The entity's integrity as a unit is lost in RDF, and must be reassembled during retrieval. By giving up the notion of an entity as a unit, RDF becomes a very general if not the most general data model. However, RDF is too general if the representation and management of objects is required. The schema-flexible data model of the document repository resembles a graph of plain objects. Graphs of plain objects are a very flexible representation of data, where values and links can be easily added and removed, and the entity integrity is preserved at the same time.

Finally, the schema-flexible database implemented by the document repository is not a document-oriented data store that stores annotated documents; instead the processed text information is stored as entities that have been assigned a semantic type to improve querying and analysis.

Note that modifying a relational database, a graph-oriented database, a graph-based data model, or a document-oriented data store to operate as a schema-flexible database in the sense of the proposed repository would change its principle of operation, and would be, depending of the type of database technology used, either be technically very difficult and complex or would make it difficult to achieve the required throughput in terms of response times and throughput.

At 204, the document repository receives the processed text information from a text analysis computer (e.g., the text analysis cluster 104 of FIG. 1). The processed text information may be in the form of XMI metadata. The text analysis computer will have generated the processed text information from documents stored by a document server (e.g., the document source 102 of FIG. 1), according to a text analysis job as described above with reference to FIG. 1. In addition, the text analysis computer assigns a semantic type to the processed text information.

At 208, the document repository stores the processed text information in the schema-flexible database. Further details of how the document repository stores this information are provided below.

At 210, the document repository outputs to an analysis computer (e.g., the aggregate analysis client 108b) data selected from the processed text information stored in the schema-flexible database, in response to a query received from the analysis computer.

At 212, the document repository outputs to an exploration computer (e.g., the exploration tools client 108c) data from the processed text information stored in the schema-flexible database in response to a query received from the exploration computer.

Note that 212 does not depend upon 210 and so may be performed before 210, concurrently with 210, or 210 (or 212) may be omitted completely.

Given the above overview, following are additional details of specific embodiments that implement the document repository and related components.

Implementation Details

We know from field experience that practically every customer needs to do some sort of custom linguistic processing, be it further text analysis specific to their industry, or transformation of the standard output of a linguistic processing program such as ThingFinder™. This additional processing will always produce additional data, and no schema fixed in development can store this data in an efficient and easily consumable way. It requires additional, expensive data modeling in the field. The high total cost of ownership and long time to value of text analysis projects have been the primary reasons for its limited success, and the cost of fixed schemas are a significant part of this.

Consequently, an embodiment of the present invention is directed toward a repository that can accept and support the processing of arbitrary data without the need to develop and evolve a domain-specific schema over time. Scalability is important because text analysis produces a truly massive amount of data. Tools like SAP Business Explorer have raised the bar, and long preparation or query times are no longer acceptable.

In addition, as applications move to on-demand cloud architectures and toward a billion users, the quantity of text being submitted for analysis will rise to new levels in on-premise systems. Systems such as StreamWork or similar collaboration tools, in which users consume perhaps even more unstructured data than structured, will accelerate this demand compared to traditional enterprise business applications.

Finally, prior Text Analytics repositories only contained the text analysis data, so there was no way for a user to explore connections to the traditional business data stored in enterprise applications. Also, while using text analysis to explore information and not just documents is a revolutionary step forward in productivity, traditional full-text search is often still a useful tool, and these past attempts didn't allow the user to do full-text search. Thus, an embodiment provides a single repository that converges structured and unstructured data, and so lets the user seamlessly explore across text analysis of unstructured data, structured business data, and document search results. There are certainly synergies between these forms of data that creates a whole greater than the parts. Search can be enhanced with text analysis. Text analysis can be enhanced with data from operational systems, data warehouses and master data management systems.

An embodiment implements a document repository using the Active Information Store (AIS). AIS is a new model for database technology that addresses these requirements in ways that prior technologies could not. AIS's schema-flexible data model will let a great variety of vertical and custom text analysis applications bloom. With AIS on SAP NetWeaver Search and Classification (TREX), embodiments meet users' performance expectations when exploring connections across a collection of documents. By combining this AIS data with the structured business data and full-text index in TREX, embodiments provide a unified user experience for discovery and analysis of information regardless of its source.

An embodiment implements a "convergence" of structured and unstructured data. This unified view of all the kinds of data in the enterprise may transform the way office workers do their jobs and collaborate.

One feature of an embodiment of the document repository 106 (see FIG. 1) enabled by the schema-flexible database is that the structure of the content may be increased at the data instance level. Initially the content may be loaded into the document repository 106 with no defined structure, as allowed by the schema-flexible database. As more content is loaded into the document repository 106, new data object types may be introduced at the data instance level. Also, new attributes, associations and annotations may be added at the data instance level. In this manner, the document repository 106 may implement a stepwise transition of relatively unstructured content to more structured content.

Overview of the Text Analysis Libraries

The text analysis cluster 104 (see FIG. 1) may implement one or more text analysis libraries. According to an embodiment, the text analysis cluster 104 implements four primary libraries: Linguistic X Platform, ThingFinder, Summarizer, and Categorizer. All have been developed in C++.

Linguistic X Platform. At the bottom of the stack is the Linguistic X Platform, also known as LX or LXP. The "X" stands for Xerox PARC, since this library is based on code licensed from them for weighted finite state transducers. LXP is an engine for executing pattern matches against text. These patterns are written by professional computational linguists, and go far beyond tools such as regular expressions or Lex and Yacc.

The input parameter to these function calls is a C array of characters containing plain text or HTML text, and the output (i.e. the return value of the functions) is C++ objects that identify stems, parts of speech (61 types in English), and noun phrases. LXP may be provided with files containing custom dictionaries or linguistic pattern rules created by linguists or domain experts for text processing. Many of these files are compiled to finite-state machines, which are executed by the processing engine of the text analysis cluster 106 (also referred to as the Xerox engine when specifically performing LXP processing).

LXP™ can detect the encoding and language of the text. In addition, the output "annotates" the text-that is, the data includes offsets into the text that indicate a range of characters, along with some information about those characters. These annotations may overlap, and so cannot in general be represented as in-line tags, a la XML. Furthermore, the output is voluminous, as every token in the text may be annotated, and often multiple times.

ThingFinder™ builds on the LXP to identify named entities-companies, countries, people, products, etc.-thirty-eight main types and sub-types for English, plus many types for sub-entities. As with LXP, ThingFinder uses several finite-state machine rule files defined by linguists. Of particular importance are the CGUL (Custom Grouper User Language) rule files that the customer may use to significantly extend what ThingFinder recognizes beyond just entities, but to "facts"-patterns of entities, events, relations between entities, etc. CGUL has been used to develop application-specific packages, such as for analyzing financial news, government/military intelligence, and "voice of the customer" sentiment analysis.

Summarizer™, like ThingFinder™, builds on LXP. In this case, the goal is to identify key phrases and sentences. The data returned from the function calls is a list of key phrases and a list of key sentences. A key phrase and a key sentence have the same simple structure. They annotate the text, and so have a begin offset and length (from which the phrase or sentence text may be obtained). They identify, as integers, the sentence and paragraph number they are a part of. Finally, they have a confidence score as a double. The volume of data is fairly small-the Summarizer may only produce ten or twenty of each per document.

Categorizer™ matches documents to nodes, called "categories", in a hierarchical tree, called a "taxonomy". Note that this use of the word is unrelated to the concept of taxonomies as otherwise used at SAP. A category node contains a rule, expressed in a proprietary language that is an extension of a full-text query language, and that may make reference to parts of speech as identified by LXP. So, in essence, Categorizer™ is a full-text search engine that knows about linguistic analysis.

These rules are typically developed by a subject-matter expert with the help of a tool with a graphical user interface called the Categorizer Workbench™. This tool includes a "learn-by-example" engine, which the user can point at a training set of documents, from which the engine derives statistical data to automatically produce categorization rules, which help to form the taxonomy data structure.

The data returned by Categorizer™ functions is a list of references to category nodes whose rules matched the document. A reference to a category node consists of the category's short name string, a long path string through the taxonomy from the root to the category, a match score as a float, and a list of reasons for the match as a set of enumerated values. The volume of data per document is fairly small-just a few matches, often just one.

Overview of AIS

With an increasing need to combine and integrate business data not only from data sources within the enterprise but also from external sources like the web, an ever accelerating growth in the amount of available and relevant business information, and a completely new scalability model of modem hardware platforms, we clearly have entered a new era of business information management.

Among the key questions here are: What data representation and programming models are suitable for a world where only a fraction of the data is well structured in the sense of classical relational data? How can we better support the successive transition from weakly or highly irregularly structured data to a more harmonized and structured representation? How can we handle the accelerating data volume explosion, especially if we don't just want to store the data but actually put it to use for business insight and decision making? How can we exploit more active mechanisms that preprocess and filter information directly in an information store and notify applications if relevant information has been found? And how can we exploit the new scaling paradigm of modem hardware architectures that increase concurrency rather than the CPU clock speed to deal with the data volume and integration challenges?

An embodiment of the present invention is directed to addressing these questions. One goal of the AIS project is to provide a scalable information repository to support data-intensive information worker and decision support applications. The AIS system is based on the following pillars. First, a scalable and efficient information management architecture that allows the handling of large data volumes (hundreds of terabytes and beyond) and large numbers of concurrent user requests. Second, a flexible data model as the foundation to store, manage, and uniformly query, transform and analyze all kinds of data, not just structured records. Third, an efficient and intuitive data query and manipulation language that allows the formulation of intuitive and efficient data operations that get executed close to the data.

An embodiment of the present invention implements the AIS as a repository for a Text Analytics tool suite (e.g., the document repository 106 of FIG. 1). Accordingly, we focus here on a flexible data model for Text Analytics data (i.e. document annotations), a suitable data query and manipulation language, and a scalable system architecture.

The AIS offers a generic data model that allows the uniform handling and the combination of structured (e.g. relational), semi-structured (e.g. irregularly structured data from web databases like Freebase or Google Base), and "unstructured" data (e.g. text documents). The AIS data model does not enforce a tight integration of data items that typically come from different heterogeneous sources into one common global data schema. Rather, it supports the coexistence of data items from different sources and their stepwise integration. The "schema" of the data in AIS is not defined upfront in a rigid way but evolves as new Info Items are imported or created, new attributes are added, and as new Associations between Info Items are established.

WIPE is the data manipulation and query language of the AIS. WIPE stands for "Weakly-structured Information Processing and Exploration". WIPE allows the declaration of multiple insert, update, delete, and query operations in one complex statement. In particular, in a WIPE statement multiple named query result sets can be declared and are executed as one logical unit of work in one request-response roundtrip.

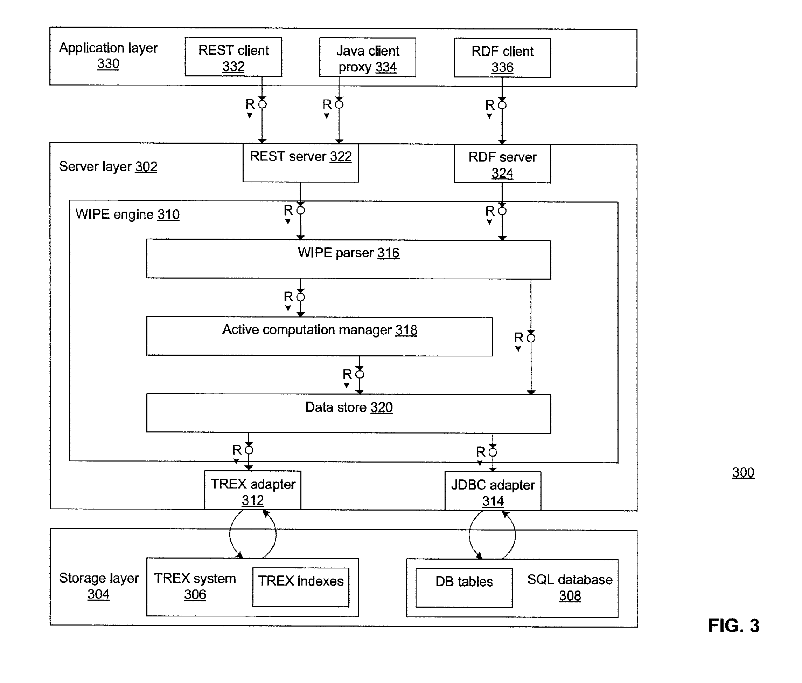

FIG. 3 is a block diagram showing a high-level view of the AIS system architecture 300 (e.g., that implements the document repository 106 of FIG. 1). The components of FIG. 3 may be viewed as computer programs that control a hardware computer to perform the various functions. The AIS system 300 is architected as a server layer 302 on top of a storage layer 304 consisting of a TREX system 306 or an SQL database 308. The TREX system 306 may be used as the underlying storage layer for high data volume scenarios that require good system scalability and performance. The use of the SQL database 308 (such as MaxDB according to an embodiment) allows the use of the AIS system 300 in settings where no TREX instance is available. Another embodiment uses an in-memory database such as SAP's NewDB as the SQL database 308. In such an embodiment, aspects of the document repository may be implemented directly inside the NewDB engine to optimize performance.

The server layer 302 includes a WIPE engine 310 that interfaces with the TREX system 306 with a TREX adapter 312, and with the SQL database 308 with a JDBC (Java™ database connectivity) adapter 314. The WIPE engine 310 includes a WIPE parser 316 that parses WIPE queries, an active computation manager 318 that performs WIPE query processing, and a data store layer 320 that stores data used by the WIPE engine 310. The WIPE engine 310 also includes a REST (representational state transfer) server component 322 for interfacing with REST applications and an RDF (resource description framework) server component 324 for interfacing with RDF applications.

Applications in the application layer 330 can access the server layer 302 through either a RESTful client API (application programming interface) 332 that offers data instances as resources or via a Java™ client proxy 334 that exposes data in the form of Java™ object instances. In addition, a RDF client 336 provides AIS data as RDF triplets for consumption by description logic reasoning engines.

Data query and manipulation statements can be formulated via the REST client 332 or Java client proxy 334 in the form of WIPE statements. These statements are sent via the REST server component 322 to the WIPE engine 310 where they are parsed and compiled into an internal abstract syntax tree (AST) for further optimization and execution by the underlying data store layer 320.

The active computation manager 318 allows the registration and management of WIPE statements for their repeated execution based on either time or data update events directly in the server layer 302.

As discussed above, the AIS system 300 supports TREX 306 or a SQL database 308 as the underlying storage engine. (Another embodiment may use an in-memory database such as NewDB.) For the use of TREX as the underlying storage engine the AIS system 300 may implement different mapping alternatives that map the AIS data model and query/manipulation language to the data structures in TREX. Prepared ASTs are handed over from the data store layer 320 to the appropriate adapter (312 or 314) that performs their translation into either TREX API calls or SQL statements. Result sets from the storage layer 304 are then converted back into a generic internal format and passed on to the client APIs (332, 334 and 336) via the REST server component 322 or the RDF server component 324.

Overview of TREX

TREX (e.g., implemented by the TREX system 306) provides search, query and analytic capabilities for text and structured data. It offers retrieval and classification services for unstructured data from text documents and allows joining and aggregating structured data from relational tables. The TREX engine was originally developed for search over and within textual documents and the name "TREX" initially stood for "Text Retrieval and Information Extraction". However, more recently the focus has been on its ability to index and query large volumes of structured data by means of massively parallel processing of data held entirely in main-memory. These more recent extensions of TREX have found their use in SAP's BW (business warehouse) Accelerator, an accelerator for OLAP (offline analytic processing) query processing for SAP BW, and are leveraged in SAP's current investment in in-memory database technology referred to as "NewDB".

Data in TREX is organized in memory as so-called indexes using advanced compression techniques. Compression is used not only to make efficient use of memory resources but also to speed up the data transfer from storage to memory and from memory to CPU.

TREX provides both horizontal and vertical data partitioning. Horizontal data partitioning of tables allows the parallel processing of data rows across all available processing nodes for data loading (i.e. building up the compressed in-memory representation of the data) and query processing.

Vertical data partitioning allows individual table columns to be loaded selectively into memory and processed as needed. Instead of pipelining entire rows through the processing cores, which is unnecessary if the query to be answered addresses only certain columns, only those columns are read that are actually needed. This way, the engine generates less data traffic between memory and the CPU caches and executes analytic queries more efficiently. In addition, by organizing data in columns, i.e. by storing values of the same attribute together, more effective compression techniques can be applied to yield higher data compression rates.

The core of TREX is the Index Server component that contains the engines that create and update indexes and use the indexes to answer incoming search or query requests. Each TREX index server contains six specialized engines: the search engine, the text-mining engine, the attribute engine, the TREX join engine, the business intelligence accelerator (BIA) engine, and the natural language interface engine.

The Attribute Engine enables users to search for structured records or text documents based on their attributes. This is a major use-case for TREX in applications involving search over large volumes of structured data via their attributes. These attributes allow users to apply the full functionality of relational database logic to find information. In many applications, structured data is stored in multidimensional schemas, where each dimension corresponds to an attribute. The attribute engine can also aggregate over attributes.

The TREX Join Engine allows calculating inner and outer joins between tables within SAP Business Objects. The engine includes a join optimizer that calculates an optimal or reasonably good sequence of joins in cases of extended join graphs.

The BIA Engine provides a query engine on top of the attribute engine to execute joins and aggregations. TREX allows to store structured data (in particular BW InfoCube data) in a highly compressed form as BIA indexes and to execute OLAP queries on this data. In cases where a large index has been split into partitions, the BIA engine parallelizes the execution of a query over all available processor cores. The BIA engine is used in the SAP BI Accelerator.

The AIS system 300 (as implementing the document repository 106 of FIG. 1) leverages the functionality of the Attribute, Join and BWA engines in TREX as the underlying data management layer. TREX offers a scalable modem data management infrastructure proven in large customer settings. Leveraging TREX technology provides for robustness and scalability. In addition, TREX's in-memory column-oriented storage structures and compression allow a more efficient representation of highly irregularly structured data and the addition or removal of attributes than traditional relational databases. This is useful for the implementation of a highly flexible data model like the AIS data model. Finally, with a stepwise increase in the degree of structure of the data in the repository, it is possible to leverage the different specialized engines within TREX (e.g. Text Search Engine, Join Engine, and BWA Engine) to speed up analysis and exploration of the data.

AIS to TREX Data Representation Model Mappings

Embodiments of the present invention may implement different alternatives for the mapping of the document repository data representation model (e.g., the AIS data representation model) to the TREX data representation structures (or the data representation structures of other structured data search tools). See, for example, the interaction between the AIS layer 302 and the storage layer 304 of FIG. 3.

The AIS Data Representation Model

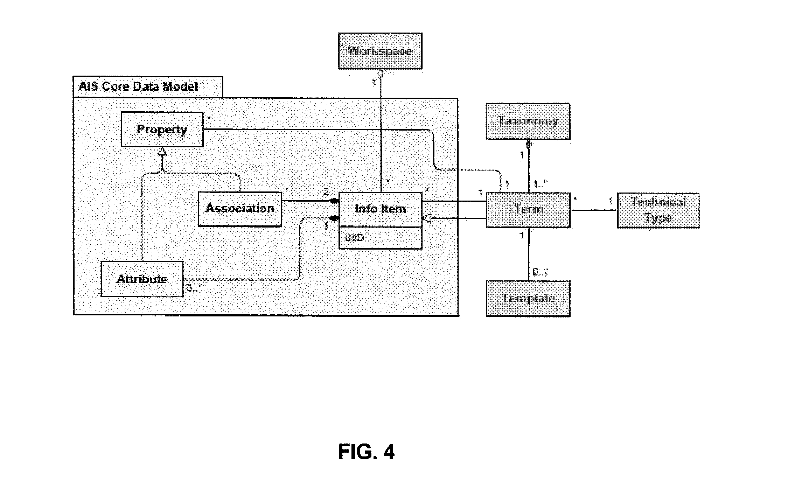

The document repository (e.g., AIS) offers a very flexible data representation model that allows the uniform handling and combination of structured, irregularly structured and unstructured data. All data managed and processed by the AIS is converted to this common data model. FIG. 4 is a class diagram, conforming to unified modeling language (UML) format, showing the key concepts of the AIS data representation model.

With the AIS data model data items of different types (e.g. the information about a specific product or person) are represented as so-called Info Items. Info Items are the unit of retrieval, extraction and correlation of data in the AIS. They are organized and persisted in Workspaces that establish a scope for visibility and access control.

An Info Item provides a single uniquely identifiable data instance which has assigned a set of Properties that describe the Info Item. Properties can be either Attributes or Associations. Attributes and associations can be added to or removed from an Info Item at any point in time. Info Items and their Properties have attached a semantic type label that indicates the assumed item class (e.g. Person), attribute type (e.g. Age), and relationship type (e.g. is-parent-of, or works-for), respectively. We call these type labels Terms.

Attributes have assigned, through their associated Term, one of multiple possible technical types, and a value which corresponds to the attribute's technical type. Attributes can therefore be understood as triplets consisting of a unique ID for the Info Item the attribute belongs to, a Term, and a value. Multi-valued attributes can be represented by multiple attributes of the same Term. Info Items that have assigned the same semantic type may, and generally do, have different sets of Properties.

Unidirectional typed relationships between pairs of Info Items can be described in the AIS data model by so-called Associations. Associations can also be understood as triplets consisting of two unique Info Item IDs for the source and target item, and a Term indicating the semantic type of the Association. The same pair of Info Items can be related via multiple Associations of different types. Associations are specified on instance level, i.e. they relate two specific Info Items. This means that Info Item instances of the same types can be related through different types of Associations.

As mentioned earlier, Terms are used to describe the assumed semantic type of an Info Item or Property. In addition to their semantic meaning, Terms also have assigned a Technical Type that determines the physical representation of the corresponding data element. In the case of a Term that describes an Info Item or an Association, the technical type is "InfoItem" and "Association", respectively. For Attributes the technical type can be "Integer", "String", "Date", etc.

The AIS data model does not require a static and predefined data schema. Rather, schema information can be derived from sets of instances on a continuous basis in the form of so-called Templates. Templates are associated with a specific Term and provide information about the structure, i.e. the Properties of the Info Items currently in the store of the corresponding Term. A Template describes the set of "mandatory" Properties which have to be given for each Info Item, the "expected" Properties that are available for most (e.g. 95%) of the currently available Info Items, and the "optional" Properties that are only given for some of the Info Items of the corresponding type. In AIS, Info Items have a system-wide unique identifier, a type (i.e. reference to a corresponding Term), and a URI (Uniform Resource Identifier) as mandatory properties.

Terms can be taken from a domain-specific Taxonomy that can be provided to AIS as semantic metadata. Terms from a specific taxonomy can be assigned to Info Items and their associations at the point of their insertion into the AIS but can be changed later. In this way, Terms can provide a first hook to make more explicit the intended meaning of an Info Item, its attributes and associations by putting it into the context of a taxonomy of type denominators.

With this, the AIS data model provides a very generic and flexible data model that does not enforce a tight integration of data items that typically come from different heterogeneous sources into one common global data schema. Rather, it supports the coexistence of data items from different sources and their stepwise integration. The "schema" of the data in AIS is not defined upfront in a rigid way but evolves as new Info Items are imported or created, new attributes are added, and as new Associations between Info Items are established.

According to an embodiment, the document repository 106 maps the processed text information into the schema-flexible database according to a generic vertical schema. This generic schema does not prescribe the structure of the different semantic types in an upfront rigid form, but allows the efficient addition of attributes and associations on a per instance level. In particular, it allows the introduction of new semantic types at system runtime without any upfront modeling.

Representation of the Text Analytics Document Model in AIS

The following sections describe the output of the text analysis cluster 104 (see FIG. 1) and how this output may be used by the document repository 106.

TA Document and "Voice of the Customer" Model

As discussed above, according to an embodiment the text analysis cluster 104 (see FIG. 1) implements ThingFinder. Conceptually, ThingFinder has three kinds of outputs, but they are shoe-homed into a single C++ object, called a "TF_Entity", by using name-value pairs to hold additional data. The method field tells which of three techniques were used to identify the entity (regular entity, custom grouper object, or a reference to a name catalog entry), and therefore whether there is additional data as name/value pairs in the form of EntityPairs or OptionPairs. If it is an entity identified by linguistic analysis, then the alternatives list may contain other interpretations (is "New York" a CITY or a STATE?). If it is an entity listed in the name catalog, then the matching records from the catalog are referenced in the catalogRecords list. If it is an entity defined by a CGUL pattern, then the rule may attach arbitrary additional data as customGrouperAttributes.

An Entity may have subEntities, which are entities within the Entity. For example, "Tom Smith" would be identified as a PERSON, with two sub-entities, FIRST_NAME "Tom" and LAST_NAME "Smith".

If aliasing is requested, then Entities are grouped in sets (called AliasGroups), which ThingFinder may identify as conceptually referring to the same real-world entity-"Tom Smith" and "Mr. Smith", for example.

The volume of data produced by ThingFinder can be very large-several times the size of the input plain text. When CGUL rules are added, it can be even considerably larger. This is illustrated by the Voice of the Customer (VOC) rules, which produce a significant amount of data.

Typically, any application of ThingFinder requires custom dictionaries, name catalogs, CGUL rules, and programmatic post-processing. In the case of sentiment analysis, the VOC rules produce additional data as new entities and attributes on those entities. This data can be very difficult (if not impossible, as with our BI tools) to use in this form, so the text analysis cluster 104 implements a domain-specific SQL schema (part of the VOC Solution Kit) that represents the sentiment data explicitly and normalizes it.

TA Document and Voice of the Customer Model in AIS

According to an embodiment, the document repository 106 mimics the database schema from the VOC Solution Kit, except as AIS Info Items. As discussed above, the document repository 106 implements a schema-flexible database, e.g. by implementing AIS. AIS will know in advance about some of these objects in the form of built-in taxonomies, but not others. This is an advantage of using AIS-we don't have to define a fixed schema up front; we can send it arbitrary data. This enables the many vertical applications that SAP, partners, and customers want to build using text analysis, since, as we see in the VOC rules, every application results in different data, and defining a separate, fixed domain-specific schema for each one raises the cost of development beyond what most projects can afford. Using AIS allows an application to simply change rules or re-write post-processing code, and throw the new data into AIS as is, with no additional work. AIS will "learn" about the structure of the data over time.

So the system started by mimicking the database schema, but we later realized that the system was missing opportunities to use the unique features of AIS to represent the data in a more flexible, convenient, and performant way. We made three improvements resulting in an improved embodiment. First, for Info Item attribute types, the system makes use of special core AIS types, for example, for URLs or unique names. This makes storage and query more efficient. Second, for Info Item types, the system explicitly represents specialization (sub-types) from other Info Item types, for example, sub-types of Annotation (a range of text). The system also replaces the EntityType and SubEntityType tables with new Info Item subtypes of the Entity Info Item type. This allows direct queries for PERSON or ORGANIZATION InfoItems while preserving the ability to query Entities generically. Third, for cases in which in the relational database schema we do not know the full range of attributes and so have to represent the data as a key/value pair table, the system implements AIS to represents them as real attributes. Two examples of this are document properties (Dublin Core properties, such as title, content type, URI, author, etc.) and XML attributes of XML elements. This really exploits AIS's ability to accept arbitrary data that was not explicitly declared in a fixed schema, and will make it much easier and faster to query based on these attributes.

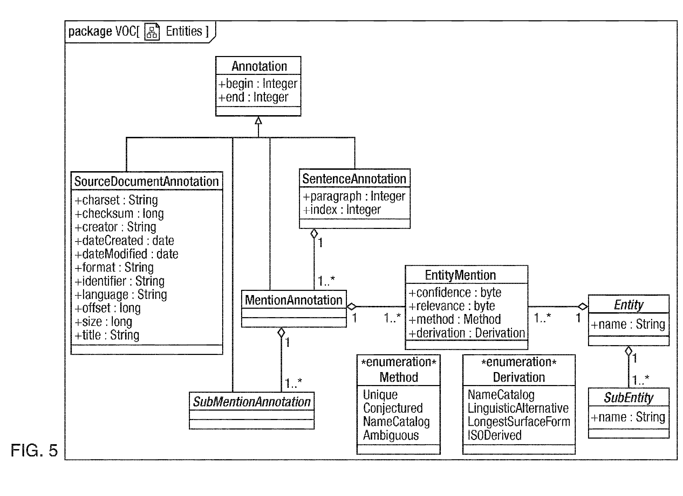

This results in the following TA related Terms shown in the four UML class diagrams of FIGS. 5-8 that AIS provides as built-in taxonomies. This allows AIS to provide TA specific optimizations since the system knows the typical structure of TA data in AIS. In addition, it provides guidelines for the specification of data queries on TA data.

Note that while the diagrams of FIGS. 5-8 look a lot like schema definitions, we are using them merely to communicate the Terms (type labels) that can be used (and that the system does use) when representing data from ThingFinder in AIS. They do not constitute rigid data schemas in the sense of schemas in relational databases.

FIG. 5 is a diagram that shows the Info Item types (Terms) that the system uses to represent "regular" entities-i.e. those that were not produced from the VOC rules. This closely mimics the former relational data schema, except that we can have an Annotation base class, i.e. AIS can naturally represent inheritance semantics between semantic types (i.e. Terms).

In place of the doc_property and doc_property_name tables, we have SourceDocumentAnnotation, which can have an arbitrary set of attributes, but with some predefined here (derived from the Dublin Core Metadata Initiative - DCMI). DCMI defines many more optional attributes, so AIS's ability to add those at run-time is really very useful.

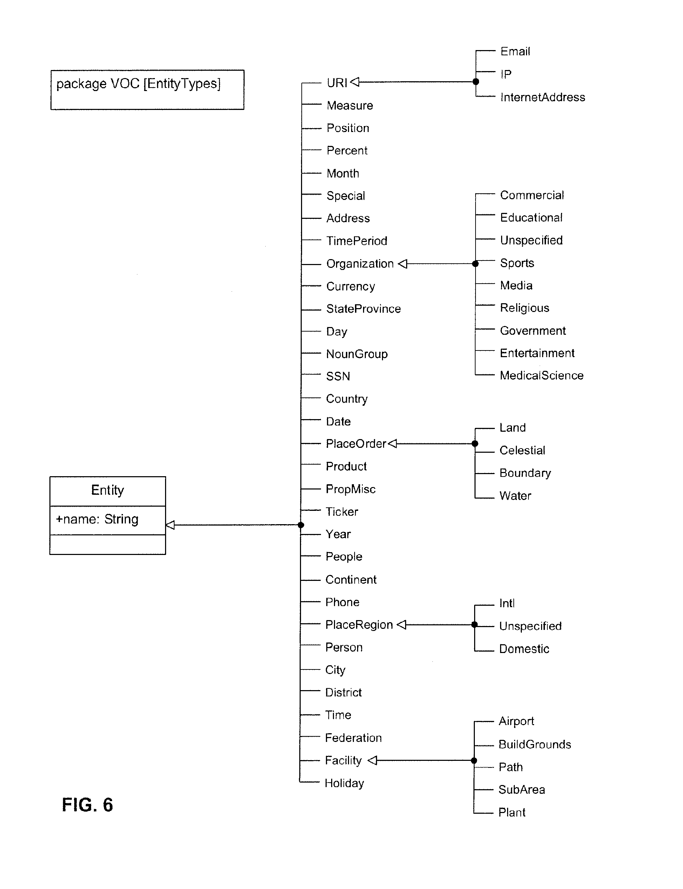

Note that there are no equivalents of the entity_type and sub_entity_type tables. These became sub-types, as shown in FIGS. 6-7. Entity, SubEntity, and SubMentionAnnotation are now abstract (noted by the italic names in UML).

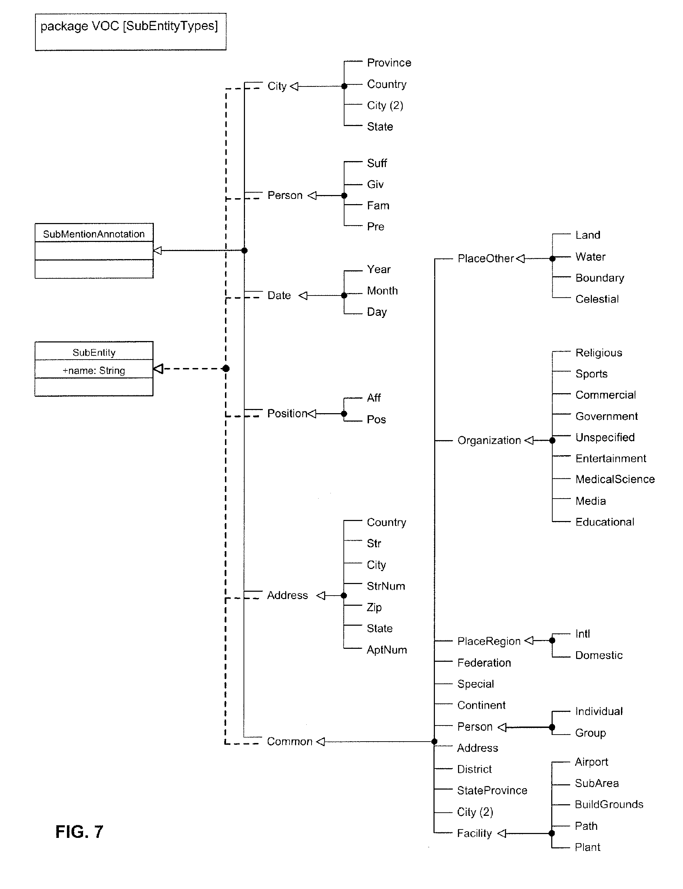

FIG. 6 is a diagram that shows the Entity types, and FIG. 7 is a diagram that shows the SubEntity types, according to an embodiment. FIGS. 6-7 illustrate the rich set of entities and subentities that ThingFinder can identify using the pattern matching rules which our linguists have spent so many years developing. As explicit sub-types in AIS, this model will simplify query and analysis of this data across documents. Entity types may have subsidiary types. For example, the "organization" entity includes the organization subsidiary types "commercial", "educational", etc. Similarly, subentity types may have subsidiary types. For example, the "date" subentity includes the person subsidiary types "year", "month" and "day". Note that the shown entities and subentities are exemplary types. Other types of entities and subentities may be represented in other embodiments.

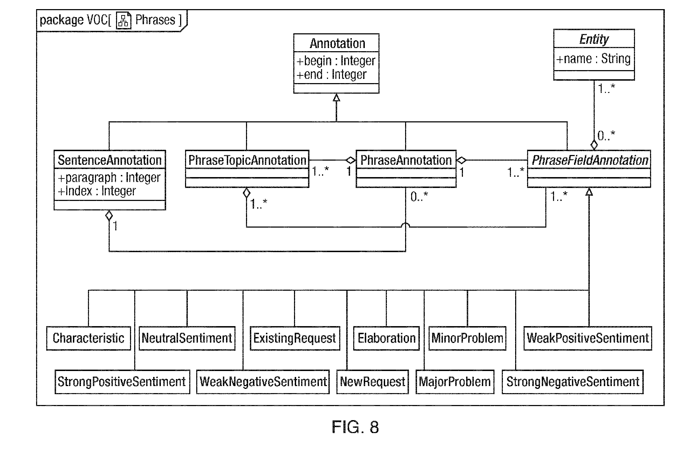

FIG. 8 is a diagram that shows a data model for phrases, according to an embodiment. In FIG. 8, we see how the special entities produced by the VOC rules are transformed into a much more useful model in AIS. Here, the sentiment phrases and their relationships are explicit, and can be easily queried.

Again, the system uses the Annotation base class. The system also repeats the SentenceAnnotation and Entity classes so that the system may reference them with additional relationships.

In a fashion similar to FIG. 5, there is no equivalent to phrase_field_type table here, because it becomes eleven sub-types of PhraseFieldAnnotation in AIS.

Note that while the classes in FIG. 5 would be present in any application of ThingFinder, the classes in FIG. 8 are specific to the particular CGUL rules that have been installed in ThingFinder, targeting a particular vertical application (e.g., customer sentiment analysis). Other rule sets would add a very different set of data to AIS. So one might argue that AIS should not know about these in advance, and should only know about those common classes in FIG. 5 (TACore Taxonomy). This is a reasonable argument, and the system has separated the Term definitions in AIS into a separate taxonomy, and other embodiments may in fact not use these Terms at all.

Finally, the abstract UML diagrams of FIGS. 5-8 are translated into a set of concrete Term objects in AIS. The relationships in these diagrams become explicit association attributes in AIS. Similar translations may occur in embodiments that implement a schema-flexible database system other than AIS.

Example Embodiment Details

The following sections describe some details of an embodiment where the document repository 106 implements AIS and TREX (see FIG. 3).

Text analysis

Text analysis includes two activities. First, the system transforms the output from the text analysis cluster 104 (see FIG. 1) into a form appropriate for input into the document repository 106. For an embodiment implementing ThingFinder and the Voice of the Customer toolbox, the transform may be referred to as a VOC transform. Second, the system inserts the transformed data into the document repository 106. For an embodiment implementing AIS, the insertion may be performed by generating WIPE insert statements using the JSON text format.

The VOC Transform

For the VOC transform, the system takes the raw list of entities that come out of ThingFinder as described in the section "TA Document and 'Voice of the Customer' Model" above, and to convert them into the normalized and more useful form as described in the section "TA Document and Voice of the Customer Model in AIS" above. The VOC solution kit implements this transform for a SQL database, so the transform may be modified according to the specifics of the document repository 106 (e.g., according to an AIS implementation, etc.).

According to an embodiment, the system uses the ThingFinder library directly. That is, the system links it into the same process as the rest of code for the transformation and output generation. According to an embodiment, ThingFinder provides a Java™ interface and the system implements these tasks in Java™. According to a further embodiment, the industry standard Java framework Apache Unstructured Information Management Architecture (UIMA) may be used.

With the ThingFinder data now in UIMA, the transformation task becomes one of working with a UIMA data structure known as the Common Analysis Structure, or CAS. This is UIMA's shared document model.

One issue is that the VOC schema has many referential cycles in it, and the raw data from ThingFinder does not come in any predictable order. This means that often a transformed object needs to make a reference to another object that does not yet exist because it is farther in the stream. To overcome this issue, the system implements a caching system in which partially formed objects could be created based on their unique keys. This way, when the system first encountered a need to reference the object and it did not already exist, the system creates a partial object and references it. Later in the stream, the system would find the full object and fill in the rest of the data. In the end, all objects are fully formed, and the system commits them to the UIMA CAS.

The Insertion

Now that the system has the transformed VOC data in the UIMA CAS and sends it to AIS. AIS accepts data using its proprietary WIPE language, encoded as JSON text. So the task in a nutshell is to walk the network of objects in the CAS, and produce insert statements for AIS InfoItems and attributes.

An embodiment accesses an API in UIMA to perform the insertion. Normally, UIMA generates output using an XML schema known as the XML Metadata Exchange (XMI). XMI is a standard defined at the OMG for both instance data (our case) and also for UML data, such as class diagrams. UIMA uses the SAX parser to generate this XML. An embodiment uses a "ContentHandler" to intercept the actual text generation and then generates WIPE/JSON text to files.

One issue with the insertion process is that JSON and XML do not always have equivalent ways ofrepresenting things. For example, XML has name spaces, JSON does not. This requires getting additional metadata from the UIMA Type System. In some cases, the system implements a three-way lookup table to find equivalent information between the Type System, XML, and JSON. There are many other examples, such as how associations are represented, and how certain characters in text must be escaped, special elements in the XMI that have no equivalents in JSON, and so on. The specifics of the lookup tables will then depend upon the other technical attributes of a particular implementation.

In addition, the system implements a tool that accesses the UIMA Type System and generates Java source code for defining the Term taxonomy in AIS.

Text Analysis Performance

The text analysis process involves a number of steps that each impact the overall performance. First is the initial text analysis operation of the text analysis cluster 104, e.g., that implements ThingFinder. Second is the conversion pipeline: file filtering HTML to plain text, entity extraction, VOC data transform, and generating output to JSON/WIPE files. Third is the JSON parsing operation. The document repository 106 may implement the second and third stages. According to an embodiment, the REST server component 322 (see FIG. 3) performs JSON parsing, and the text analysis cluster 104 generates the JSON/WIPE files.

Experimental results showed that the initial text analysis operation is very slow. Thus, in the system 100, the text analysis cluster 104 should be implemented using multiple computers, multiple blades, or multiple processors, and that the text analysis system (e.g., ThingFinder) implemented by the text analysis cluster 104 should be configured to parallelize its operations over the multiple devices. The conversion pipeline adds little time as compared to the initial text analysis operation.

Further Implementation Details

Based on experimental results of the system 100 (see FIG. 1), we have observed the following regarding text analysis. First, text analysis is CPU intensive, and has practically no dependency on disk I/O. Second, the hardware requirements for text analysis (e.g., the processors and disks for the text analysis cluster 104) are completely different than those for the document repository 106 (e.g., the processors and disks for AIS and TREX). Text analysis machines do not need to be reliable, just cheap; TREX machines are the opposite. Third, text analysis throughput is low, especially when using CGUL rules, such as the voice-of-the-customer rules. Fourth, text analysis produces massive amounts of data-many times the bytes of text that is given to it. Thus, the network bandwidth will quickly become the bottleneck.

Additionally, we have observed the following regarding the document repository 106. First, text analysis data storage is insert-intensive. Second, collection-level analysis is query-intensive and update-intensive over large volumes of data. Third, Navigation and discovery are query intensive over small volumes of data (traversing the graph), but from a massive number of clients. These three interactions place conflicting demands on the document repository 106, so different optimizations are appropriate for each.

This led to a few noteworthy decisions regarding the architecture of the system 100 (see FIG. 1). First, separate text analysis from the repository because they scale differently. Thus, the text analysis cluster 104 is separate from the document repository 106. Second, scale text analysis on cheap hardware that is elastic and fault-tolerant. Thus, the text analysis cluster 104 is built using multiple, scalable hardware devices. Third, minimizing the data on the network is a goal because it is the ceiling on system throughput. Thus, the data transfer between the text analysis cluster 104 and the document repository 106 may be compressed. Fourth, move collection-level (aggregate) analysis close to the data (e.g., into the document repository 106) as much as possible.

As mentioned above, the system 100 (see FIG. 1) separates the three clients of the document repository 106, because they have three very different interaction patterns with the document repository 106, and three very different scaling and hardware requirements. In FIG. 1, data moves chronologically from left to right. It starts when an application makes a job request (e.g., via the application client 108a), which says to process a certain set of documents using a certain configuration of text analysis.

The text analysis cluster 104 queries and pulls documents from the document source 102, and processes them in a custom pipeline for that job. The text analysis cluster 104 may process other jobs at the same time. The text analysis results for each document are pushed to the document repository 106, where they are inserted and become part of a collection (one of many in the repository-it may be multitenant).

After the job is complete, collection-level analysis can be performed (e.g., via the aggregate analysis client 108b). This may be statistical, machine learning, and/or linguistic. Analysis may involve queries over the entire collection, and the result is insertions of connections between documents and aggregate metrics about the collection. This is similar to the preparation phase in a data warehouse (building the cube).

Finally, an application server providing sessions to many users makes query requests (e.g., via the end-user client 108c). Some queries are for the results of the collection-level analysis, and some are for graph traversal (connections between documents).

Text Analysis Cluster 104

A document repository is not very useful without a practical way to create the data to be stored in it. Text analysis is very CPU-intensive, especially when using custom pattern-matching rules such as in voice-of-the-customer sentiment analysis, and so finding a way to linearly scale to hundreds, if not thousands, of CPU cores is often a requirement. Our concerns in designing an architecture and system landscape primarily revolve around performance-throughput, scalability, and costs (hardware, operational, etc).

One alternative is to implement the text analysis and the repository in separate devices. Such an alternative is preferred and is shown in FIG. 3 (note the text analysis cluster 104 and the document repository 106).

Another alternative is to combine the text analysis libraries (e.g., ThingFinder) with the repository (e.g., AIS) in the same device (or process). Being in the same process would provide a much higher bandwidth communication of the very large amounts of data produced from text analysis, making it faster to insert the data.

A further alternative is to implement the document repository (e.g., AIS) in the same device (or process) as the text storage (e.g., TREX). Such an embodiment is shown in FIG. 3 (note the AIS layer 302 and the storage layer 304). Such an embodiment provides a significant performance advantages for insert and query. This embodiment may be implemented by adding the AIS layer 302 to what is referred to as a "TREX appliance", implementing FIG. 3.

A still further alternative is to combine all three layers of software-text analysis (e.g., ThingFinder), document repository (e.g., AIS) and text storage (e.g., TREX)-on the same device (process). Such an embodiment may be visualized by adding a text analysis layer to the TREX appliance otherwise shown in FIG. 3.

In any case, the TREX appliance is a set of blades with a private network and a fiber-optic storage-area network for disk I/O. This appliance is a very expensive machine (high-end components, redundancy, etc.-$20,000 per blade) and is limited in the number of cores and RAM, which should be dedicated to TREX.

But text analysis may be parallelized, thus able to use thousands of cheap cores, so the TREX appliance is not a cost-effective place to run text analysis. Text analysis should run outside the TREX appliance.

That leaves the question of where AIS should run-in TREX (in same process or at least on the same machine), or in the same process as text analysis. It is a question of which side of AIS would the networking be most efficient. The currently preferred embodiment is shown in FIG. 3, where AIS is collocated with TREX, implemented by the TREX appliance. For example, the TREX appliance implements the AIS component on one or more of its blades. This allows for some post processing for data requests to TREX in the AIS layer.

The potential bottle-neck in the system 100 (see FIG. 1) is the document repository 106, since it is the center of all three clients, which have very different interactions with the document repository 106. In the case of the text analysis client, the interaction is 100% inserts.

The text analysis cluster 104 may be implemented by a scalable cluster of cheap machines with fast CPUs and slow disks, while the document repository 106 may implement TREX using expensive blades with a fiber-optic storage network.

To minimize the data on the network, the system 100 is configured so that the document is on the network only once (the minimum, since it must come from the document source 102), and the text analysis results are on the network only once (the minimum, if we run text analysis and AIS on different machines as shown in FIG. 1). This means that all processing for a given document takes place on the same machine-no calling out to other services on the network. The services come to the data, not the other way around.

To scale linearly and indefinitely, all machines in the text analysis cluster 104 need not be specialized. Each does basically the same thing (although possibly with different configurations): it processes a document from beginning to end. Any machine can process any document using any processing configuration.

This homogeneity also allows for fault tolerance and low cost of management. If a machine crashes, another machine may automatically start the document over with no data loss. If the system 100 needs greater capacity, just add more machines. Further, there is no need to manage different "flavors" of machines (entity extraction, categorization, etc.) and balance the ratios of flavors depending on the current text analysis configuration. The load is naturally balanced and all machines are fully occupied as long as there are at least as many documents to be processed as cores. In short, active monitoring and management are unnecessary, thereby reducing the cost of ownership.

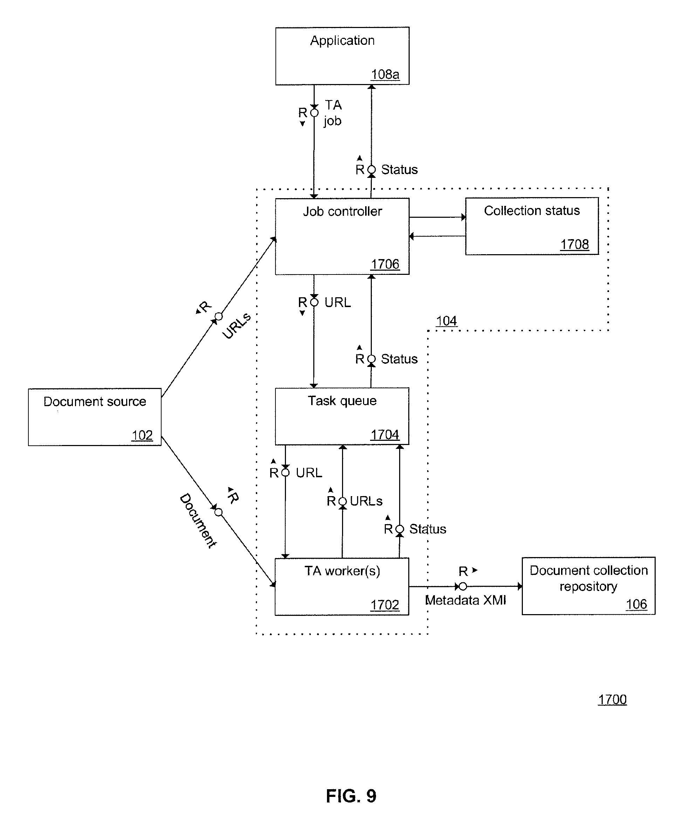

FIG. 9 is a block diagram of a text analysis system 1700 showing further details of the text analysis cluster 104 (cf. FIG. 1). As discussed above, the text analysis cluster 104 may be implemented by multiple hardware devices that, in an embodiment, execute various computer programs that control the operation of the text analysis cluster 104. These programs are shown functionally in FIG. 9 and include a TA worker 1702, a task queue 1704, and a job controller 1706. The TA worker 1702 performs the text analysis on a document. There may be multiple processing threads that each implement a TA worker 1702 process. The job controller 1706 uses collection status data (stored in the collection status database 1708). The embodiment of FIG. 9 basically implements a networked producer/consumer queue (also known as the master/worker pattern).

According to an embodiment, the job controller 1706, the task queue 1704 and the TA workers 1702 are implemented by at least three computer systems connected via a network. The task queue 1704 may be implemented as a tuple-space service. The master (the controller 1706) sends the tasks to the space service, which places them in a single, first-in-first-out queue 1704 shared by all the tasks of all the jobs of all the clients. An embodiment uses Jini/JavaSpaces to implement the space service; other embodiments may use other technologies.

There are many worker processes 1702 running on one or more (often many) machines. Each worker 1702 connects to the space service, begins a transaction, and requests the next task from the queue 1704. The worker 1702 takes the document identifier (e.g., URL) from the task, and downloads the document directly from its source system 102 into memory. This is the first and only time the document is on the network.

Further details of the text analysis cluster 104 are provided in the related U.S. Application No. _ for "System and Method Implementing a Text Analysis Service", attorney docket number 000005-018700US, filed on the same date as the present application.

The text analysis cluster 104 has a number of noteworthy aspects. First, it is very efficient with network bandwidth. The document is on the network only once, as it travels from the source 102 to the worker 1702. The result set for a document is on the network only once, as it travels from the worker 1702 to the document repository 106. And there are no network bottlenecks, so the system can scale linearly. All this means that the size of the cluster 104 we can build for a given network bandwidth is maximized.

Second, it has a low cost of ownership. It requires no monitoring or management. If a machine should crash, then the task queue 1704 will time out on the transactions held by workers on that machine, and the tasks for those transactions will be returned to the queue, where other workers will process them. If we need more throughput, just add more machines and their workers will start taking tasks. Machines can be cheap-fast CPU, a good amount of RAM, and a good network card are all that are needed. Other than loading software, there is no disk I/O during processing. Reliability is not necessary since recovery is automatic. All the machines have the same software installed. Any worker 1702 can execute any task from any job, regardless of configuration. Each worker 1702 will load code as needed for the given configuration, and all execution takes place in that thread, in the same address space-so it is very efficient. As long as there are tasks in the queue, the workers will be equally busy, even though they may be executing different code on differently size documents, and so having very different execution durations. Therefore, a worker 1702 is never idle as long as there is another task in the queue. Bottom line: no one has to configure and reconfigure machines as the quantity or quality of jobs change over time-it is automatic. This saves a lot of management costs.

Third, it can simultaneously and fairly serve any number of applications submitting jobs. The task queue 1704 can be ordered prioritized based on priority, first-come-first-serve, round-robin, or any other scheduling algorithm that the user feels would be fair. The tasks themselves can reference any processing configuration, and any worker 1702 can process any task, regardless of what job or application it came from. So one cluster can at the same time, and without reconfiguration, serve CRM, ERP, ByDesign, Stream Work, Elements, and any other text analysis client that is available. It becomes a general-purpose text analysis service on a network for any application or tool.

In fact, tasks do not even need to be text analysis tasks, they could be any Java™ code wrapped in an execute() method (i.e. the Command Pattern). For example, if we need to run tasks after a set of documents are processed, for result-set analysis (a kind of "reduce" stage), then the system can insert that into the queue 1704 too. So the cluster design is very flexible and we can use it to solve other scaling problems as they arise.

Although embodiments of the present invention implement AIS and TREX specifically, it is to be understood that the principles of the present invention may be applied to other data storage and analysis systems. For example, instead of AIS, another schema-flexible document repository may be implemented. Similarly, instead of TREX, another text storage system may be implemented. In addition, when a NewDB implementation is used for the data storage, some aspects of the document repository may be implemented directly inside the NewDB engine to optimize performance.

FIG. 10 is a block diagram of an example computer system and network 2400 for implementing embodiments of the present invention. Computer system 2410 includes a bus 2405 or other communication mechanism for communicating information, and a processor 2401 coupled with bus 2405 for processing information. Computer system 2410 also includes a memory 2402 coupled to bus 2405 for storing information and instructions to be executed by processor 2401, including information and instructions for performing the techniques described above. This memory may also be used for storing temporary variables or other intermediate information during execution of instructions to be executed by processor 2401. Possible implementations of this memory may be, but are not limited to, random access memory (RAM), read only memory (ROM), or both. A storage device 2403 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 2403 may include source code, binary code, or software files for performing the techniques or embodying the constructs above, for example.

Computer system 2410 may be coupled via bus 2405 to a display 2412, such as a cathode ray tube (CRT) or liquid crystal display (LCD), for displaying information to a computer user. An input device 2411 such as a keyboard and/or mouse is coupled to bus 2405 for communicating information and command selections from the user to processor 2401. The combination of these components allows the user to communicate with the system. In some systems, bus 2405 may be divided into multiple specialized buses.

Computer system 2410 also includes a network interface 2404 coupled with bus 2405. Network interface 2404 may provide two-way data communication between computer system 2410 and the local network 2420. The network interface 2404 may be a digital subscriber line (DSL) or a modem to provide data communication connection over a telephone line, for example. Another example of the network interface is a local area network (LAN) card to provide a data communication connection to a compatible LAN. Wireless links is also another example. In any such implementation, network interface 2404 sends and receives electrical, electromagnetic, or optical signals that carry digital data streams representing various types of information.

Computer system 2410 can send and receive information, including messages or other interface actions, through the network interface 2404 to the local network 2420, the local network 2421, an Intranet, or the Internet 2430. In the network example, software components or services may reside on multiple different computer systems 2410 or servers 2431, 2432, 2433, 2434 and 2435 across the network. A server 2435 may transmit actions or messages from one component, through Internet 2430, local network 2421, local network 2420, and network interface 2404 to a component on computer system 2410.

The computer system and network 2400 may be configured in a client server manner. For example, the computer system 2410 may implement a server. The client 2415 may include components similar to those of the computer system 2410.

More specifically, the client 2415 may implement a client-side interface for displaying information generated by the server, for example via HTML or HTTP data exchanges. The computer system 2400 may implement the system 100 described above (see FIG. 1 and related text), for example by executing one or more computer programs. For example, the computer system 2410 may implement the document collection repository 106; the client 2415 may implement the application client 108a; the server 2431 may implement the document source 102; and the server 2432 may implement the text analysis cluster 104.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A computer implemented method of storing information, comprising:
implementing, by a document repository server computer, a schema-flexible database;
receiving, by the document repository server computer, processed text information from a text analysis computer, wherein a semantic type is assigned to the processed text information;
storing, by the document repository server computer, the processed text information in the schema-flexible database; and
outputting, by the document repository server computer to an analysis computer, data selected from the processed text information stored in the schema-flexible database in response to a query received from the analysis computer.

2. The computer implemented method of claim 1, further comprising:
outputting, by the document repository server computer to an exploration computer, second data selected from the processed text information stored in the schema-flexible database in response to a second query received from the exploration computer.

3. The computer implemented method of claim 1 or 2, wherein the processed text information includes a plurality of interrelated entities.

4. The computer implemented method of any of the preceding claims, wherein the processed text information includes a plurality of interrelated entities, wherein the plurality of interrelated entities are other than key-value pairs.

5. The computer implemented method of any of the preceding claims, wherein the processed text information includes a plurality of interrelated entities, wherein an entity includes a plurality of attributes and a plurality of associations.

6. The computer implemented method of any of the preceding claims, wherein the processed text information differs from document-oriented data.

7. The computer implemented method of any of the preceding claims, wherein the schema-flexible database differs from a document-oriented database.

8. The computer implemented method of any of the preceding claims, wherein the schema-flexible database differs from a graph-oriented database.

9. The computer implemented method of any of the preceding claims, wherein the semantic type includes an item class, and attribute type, and a relationship type.

10. The computer implemented method of any of the preceding claims, further comprising:
mapping, by the document repository server computer, the processed text information into the schema-flexible database according to a generic vertical schema.

11. A system for storing information, comprising:
a text analysis computer that is configured to generate processed text information; and
a document repository server computer that is configured to implement a schema-flexible database, to receive the processed text information having a semantic type assigned thereto, to store the processed text information in the schema-flexible database, and to output data selected from the processed text information stored in the schema-flexible database in response to a query.

12. The system of claim 11, wherein the document repository server computer comprises:
a server layer that is configured to control the document repository server computer to receive the processed text information having the semantic type assigned thereto and to output the data selected from the processed text information stored in the schema-flexible database in response to the query; and
a storage layer that is configured to control the document repository server computer to implement the schema-flexible database and to store the processed text information in the schema-flexible database.

13. The system of claim 12, wherein the server layer comprises:
a parser program that is configured to control the document repository server computer to parse the query;
an active computation manager program that is configured to control the document repository server computer to process the query; and
a data store program that is configured to control the document repository server computer to store the data.

14. A non-transitory computer readable medium storing a computer program for controlling a document repository server computer to execute processing comprising:
implementing, by the document repository server computer, a schema-flexible database;
receiving, by the document repository server computer, processed text information from a text analysis computer, wherein a semantic type is assigned to the processed text information;
storing, by the document repository server computer, the processed text information in the schema-flexible database; and
outputting, by the document repository server computer to an analysis computer, data selected from the processed text information stored in the schema-flexible database in response to a query received from the analysis computer.

15. The non-transitory computer readable medium of claim 14, further adapted to perform a method according to any of claims 2 to 10 when executed.
